# EUROPEAN PATENT SPECIFICATION

(11) **EP 3 604 952 B1**
(45) Date of publication and mention of the grant of the patent: **09.12.2020**
(21) Application number: 19185094.0
(22) Date of filing: 09.07.2019
(51) Int. Cl.: F24F 11/37, F24F 11/46, F24F 11/54, F24F 1/06, F24F 1/44, F25B 27/00, F25B 13/00

(54) **AIR CONDITIONER**
KLIMAANLAGE
CLIMATISEUR

(30) Priority: 30.07.2018 JP 2018142636
(43) Date of publication of application: 05.02.2020
(73) Proprietor: Panasonic Intellectual Property Management Co., Ltd., Osaka-shi, Osaka 540-6207 (JP)
(72) Inventor: SAITO, Shingo, Osaka, 540-6207 (JP); OHKAWA, Kazunobu, Osaka, 540-6207 (JP); SUITA, Yoshitaka, Osaka, 540-6207 (JP)
(74) Representative: Eisenführ Speiser

(56) References cited:
- JP-A- 2007 187 342
- JP-A- 2017 106 653
- JP-B2- 5 249 164

## Description

### BACKGROUND OF THE INVENTION

### Field of the Invention

The present invention relates to an air conditioner, and more particularly to an air conditioner in which a GHP outdoor unit and an EHP outdoor unit are for combined use.

### Description of the Related Art

In general, there is known an air conditioner in which an indoor unit performs air conditioning by use of an outdoor unit in which a compressor to be driven by a gas engine or the like is mounted and an outdoor unit in which a compressor to be driven by electricity is mounted.

As this air conditioner, there has been heretofore disclosed, for example, an air conditioner including a second outdoor unit including a high-capacity compressor, a four-way valve and an outdoor heat exchanger, a first outdoor unit including a low-capacity compressor, a four-way valve and an outdoor heat exchanger, and an indoor unit connected to these outdoor units via one refrigerant system (e.g., see Japanese Patent Laid-Open No. 2017-150687).

In such an air conditioner that performs air conditioning by use of a GHP outdoor unit and an EHP outdoor unit, control is executed on basis of a control instruction signal by a controller control section that generally controls a GHP control section and an EHP control section.

This controller control section estimates an air conditioning load on basis of a differential temperature between a suction temperature of each indoor unit and a set temperature by a remote controller, and an outdoor output calculated value, and sends an instruction signal of an operation upper limit horsepower to the GHP control section and the EHP control section in accordance with this estimated air conditioning load. This enables an efficient operation depending on a situation.

Document JP 5 249164 B2, which shows the features of the preamble of claim 1, discloses another air conditioning system having multiple outdoor units (GHP and EHP type), individually controlled by a central controller in response to a load value acquired from the indoor unit.

However, for example, in a situation where an air conditioning operation is not performed for a while and an air conditioning capability is urgently required in early morning of winter or the like, an operation is performed on an estimated air conditioning load so that priority is given to efficiency. In this case, to suppress the horsepower, much time is taken until reaching a desired temperature, and comfort may be impaired.

The present invention has been developed in view of the above described respects, and an object thereof is to provide an air conditioner that is capable of performing an operation with an increased operation horsepower only when an air conditioning capability is required, without disturbing an efficient air conditioning operation as much as possible.

### SUMMARY OF THE INVENTION

To achieve the above object, according to one aspect of the present invention, there is provided an air conditioner as defined in claim 1, n which each of a plurality of outdoor units is connected to an indoor unit via an interunit pipe, each outdoor unit is operated, and indoor air conditioning is performed by the indoor unit, the air conditioner including for each outdoor unit an outdoor control section that is configured to control the respective outdoor unit, an indoor control section that is configured to control the indoor unit, and a controller control section that is configured to send a control instruction signal to the outdoor control section and the indoor control section, wherein the outdoor control section is configured to calculate an outdoor output of the outdoor unit from an operation state of the outdoor unit, to correct an outdoor output calculated value and to transmit the value to the controller control section, when determining that a discharge differential temperature calculated value calculated by the indoor control section is more than or equal to a predetermined value, and the controller control section ; is configured to set an operation upper limit horsepower of the outdoor unit on basis of the corrected outdoor output calculated value, and to transmit the horsepower to the outdoor control section.

According to this aspect, the controller control section is configured to set the operation upper limit horsepower of the outdoor unit on the basis of the corrected outdoor output calculated value, and to transmit the horsepower to the outdoor control section. Consequently, the outdoor control section can perform an operation based on the corrected outdoor output calculated value, and can perform the operation with the increased operation upper limit horsepower only when an air conditioning capability is urgently required.

According to an air conditioner of the present invention, an efficient air conditioning operation can be performed. Only when an air conditioning capability is urgently required, an operation upper limit horsepower is increased, and a necessary horsepower can be obtained. As a result, it is possible to enhance air conditioning comfort.

### BRIEF DESCRIPTION OF THE DRAWINGS

Fig. 1 is a configuration diagram of an air conditioner according to an embodiment of the present invention;
Fig. 2 is a block diagram showing a control configuration of the present embodiment; and
Fig. 3 is a flowchart showing an operation of the present embodiment.

### DETAILED DESCRIPTION OF THE PREFERRED EMBODIMENT

In a first aspect of the present invention, there is provided an air conditioner in which each of a plurality of outdoor units is connected to an indoor unit via an interunit pipe, each outdoor unit is operated and indoor air conditioning is performed by the indoor unit, the air conditioner including for each outdoor unit an outdoor control section that is configured to control the respective outdoor unit, an indoor control section that is configured to control the indoor unit, and a controller control section that is configured to send a control instruction signal to the outdoor control section and the indoor control section, wherein the outdoor control section is configured to calculate an outdoor output of the outdoor unit from an operation state of the outdoor unit, to correct an outdoor output calculated value 1 and to transmit the value to the controller control section, when determining that a discharge differential temperature calculated value calculated by the indoor control section is more than or equal to a predetermined value, and wherein the controller control section is configured to set an operation upper limit horsepower of the outdoor unit on basis of the corrected outdoor output calculated value, and to transmit the horsepower to the outdoor control section.

According to this aspect, the controller control section is configured to set the operation upper limit horsepower of the outdoor unit on the basis of the corrected outdoor output calculated value. Consequently, the outdoor control section can perform an operation based on the corrected outdoor output calculated value. In consequence, only when an air conditioning capability is urgently required, the operation upper limit horsepower is increased, and a necessary horsepower can be obtained, without impairing an efficient air conditioning operation. As a result, it is possible to enhance air conditioning comfort.

In a second aspect of the invention, when a plurality of indoor units are provided, the discharge differential temperature calculated value by the indoor control section is a value obtained by averaging discharge differential temperatures of the plurality of indoor units.

According to this aspect, the discharge differential temperature calculated value is an average value of the discharge differential temperatures of the plurality of indoor units. Consequently, a state of the indoor unit can be determined on the basis of the discharge differential temperature of each of the plurality of indoor units.

In a third aspect of the invention, correction processing of the outdoor output calculated value by the outdoor control section is performed by multiplying the outdoor output calculated value by a correction value α, when determining that the discharge differential temperature calculated value calculated by the indoor control section is more than or equal to the predetermined value.

According to this aspect, the outdoor control section can simply perform the correction processing of the outdoor output calculated value.

In a fourth aspect of the present invention, the plurality of outdoor units include a GHP outdoor unit including a GHP compressor that is driven by an engine and an EHP outdoor unit including an EHP compressor that is driven by a commercial power source.

According to this aspect, the plurality of outdoor units can be constituted of the GHP outdoor unit and the EHP outdoor unit. Only when the air conditioning capability is urgently required for the GHP outdoor unit and the EHP outdoor unit, the operation upper limit horsepower is increased, and the necessary horsepower can be obtained. As a result, it is possible to enhance the air conditioning comfort.

Hereinafter, description will be made as to an embodiment of the present invention with reference to the drawings.

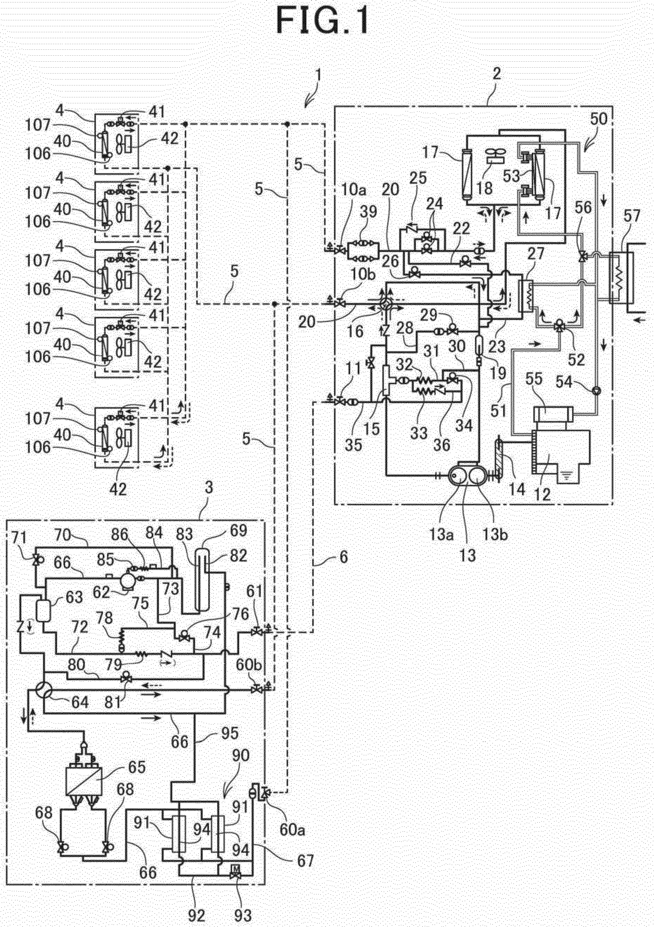

Fig. 1 is a configuration diagram showing the embodiment of an air conditioner according to the present invention.

As shown in Fig. 1, an air conditioner 1 includes a GHP outdoor unit 2 (a second outdoor unit) including a GHP compressor 13 that is driven as a high capacity compressor by a gas engine, an EHP outdoor unit 3 (a first outdoor unit) including an EHP compressor 62 that is driven as a low capacity compressor by a commercial power source, and a plurality of indoor units 4. The GHP outdoor unit 2, the EHP outdoor unit 3 and the respective indoor units 4 are connected via an interunit pipe 5 and an oil balance pipe 6. Consequently, a refrigeration cycle circuit to perform an air conditioning operation is constituted.

The GHP outdoor unit 2 includes two external connection valves 10a and 10b to be connected to the external interunit pipe 5 and an oil connection valve 11 to be connected to the oil balance pipe 6.

In the GHP outdoor unit 2, there are provided the gas engine 12 as an engine, and a GHP compressor 13 that compresses a refrigerant by a drive force of the gas engine 12. The GHP compressor 13 is constituted of a first GHP compressor 13a and a second GHP compressor 13b that are provided in parallel.

The gas engine 12 burns a mixed gas of a fuel such as a gas supplied through a fuel regulating valve (not shown) and air supplied through a throttle valve (not shown) to generate the drive force.

A drive belt 14 is bridged between an output shaft of the gas engine 12 and a driven shaft of the GHP compressor 13, and the drive force of the gas engine 12 is transmitted via the drive belt 14, to drive the GHP compressor 13.

An oil separator 15, a four-way valve 16 and two outdoor heat exchangers 17 and 17 are successively connected to a discharge side of the GHP compressor 13, and each outdoor heat exchanger 17 is connected to one external connection valve 10a via a refrigerant pipe 20. An outdoor fan 18 to exchange heat between the outdoor heat exchanger 17 and outdoor air is provided in the vicinity of the outdoor heat exchanger 17.

Furthermore, the other external connection valve 10b is connected to the refrigerant pipe 20. A middle portion of this refrigerant pipe 20 is connected to a suction side of the GHP compressor 13 via the four-way valve 16 and an accumulator 19.

Electric valves 24 and a check valve 25 are connected in parallel with the middle portion of the refrigerant pipe 20, and the refrigerant pipe 20 is connected to a liquid pipe 22 connected to an inflow side of the accumulator 19. A dry core 39 is provided between the outdoor heat exchanger 17 and the external connection valve 10a.

Furthermore, a heat exchange refrigerant pipe 23 that connects the suction side of the GHP compressor 13 to the refrigerant pipe 20 is connected between the suction side of the GHP compressor 13 and the refrigerant pipe 20, and in this heat exchange refrigerant pipe 23, an electric valve 26 is provided. A plate type heat exchanger 27 is provided between the electric valve 26 of the heat exchange refrigerant pipe 23 and the suction side of the GHP compressor 13.

The GHP outdoor unit 2 includes a bypass pipe 28 that connects a discharge side of the GHP compressor 13 to the suction side thereof. One end of the bypass pipe 28 is connected between the oil separator 15 and the four-way valve 16, and the other end of the bypass pipe 28 is connected between the accumulator 19 and the four-way valve 16. A part of the refrigerant on the discharge side of the GHP compressor 13 flows through the bypass pipe 28 to the suction side of the GHP compressor 13 due to a pressure difference.

In the bypass pipe 28, a bypass valve 29 that regulates a flow rate of the bypass pipe 28 is provided. The bypass valve 29 is an electric valve that can open and close stepwise.

The GHP outdoor unit 2 includes an oil return pipe 30 that connects the oil separator 15 to the suction side of the GHP compressor 13. Lubricating oil stored in the oil separator 15 flows through the oil return pipe 30 to the suction side due to the pressure difference between the discharge side and the suction side of the GHP compressor 13.

The oil return pipe 30 includes a first return pipe 31 that connects an oil outflow port of the oil separator 15 to the suction side of the GHP compressor 13, and a second return pipe 36 provided in parallel to the first return pipe 31.

The first return pipe 31 includes a capillary tube 32.

The second return pipe 36 is connected to the first return pipe 31 to pass by the capillary tube 32. One end of the second return pipe 36 is connected to an upstream side of the capillary tube 32 in the first return pipe 31, and the other end of the second return pipe 36 is connected to a downstream side of the capillary tube 32 in the first return pipe 31.

The second return pipe 36 includes a capillary tube 33, and an oil return valve 34 provided on a downstream side of the capillary tube 33.

The oil connection valve 11 is connected to an oil pipe 35. A middle portion of the oil pipe 35 is branched, so that one oil pipe is connected to the downstream side from the oil separator 15 of the refrigerant pipe 20, and the other oil pipe is connected between the capillary tube 33 of the second return pipe 36 and the oil return valve 34.

The external connection valve 10a connected to the refrigerant pipe 20 is connected to one end of an indoor heat exchanger 40 of each indoor unit 4 via the interunit pipe 5. An expansion valve 41 is provided in a middle portion of the interunit pipe 5.

In each indoor unit 4, an indoor fan 42 is provided to exchange heat between the indoor heat exchanger 40 and indoor air.

Furthermore, the other end of each indoor heat exchanger 40 is connected via the interunit pipe 5 to the external connection valve 10b connected to the refrigerant pipe 20.

Furthermore, the GHP outdoor unit 2 includes a cooling water circuit 50 of the gas engine 12.

The cooling water circuit 50 includes a cooling water three-way valve 52, the plate type heat exchanger 27, a radiator 53 disposed close to the one outdoor heat exchanger 17, a cooling water pump 54, and an exhaust gas heat exchanger 55 of the gas engine 12, which are connected in order from the gas engine 12 via a cooling water pipe 51. The cooling water pump 54 is driven, to circulate cooling water through this circuit.

The cooling water pipe 51 of the cooling water circuit 50 is shown by a double line in Fig. 1, and flow of the cooling water is shown by a solid arrow line.

In the radiator 53, heat is exchanged between the outdoor air and the cooling water.

Furthermore, in the plate type heat exchanger 27, the electric valve 26 is operated so that the refrigerant that returns to the GHP compressor 13 is heated by the cooling water that flows through the cooling water pipe 51. Consequently, a low pressure of the refrigerant rises, and a heating efficiency improves.

The cooling water circuit 50 can form a first route in which the cooling water flows in order from the gas engine 12 through the cooling water three-way valve 52, the radiator 53, the cooling water pump 54, and the exhaust gas heat exchanger 55 to the gas engine 12.

Furthermore, the cooling water circuit 50 can form a second route in which the cooling water flows in order from the gas engine 12 through the cooling water three-way valve 52, the plate type heat exchanger 27, the cooling water pump 54 and the exhaust gas heat exchanger 55 to the gas engine 12.

In a middle of the first route that connects the radiator 53 to the cooling water three-way valve 52, a hot water three-way valve 56 is provided. The hot water three-way valve 56 is connected to a hot water heat exchanger 57 that exchanges heat between the cooling water and hot water, and the cooling water that flows through the hot water heat exchanger 57 is returned to an upstream side of the cooling water pump 54.

Next, description will be made as to the EHP outdoor unit 3.

The EHP outdoor unit 3 includes two external connection valves 60 to be connected to the external interunit pipe 5 and an oil connection valve 61 to be connected to the oil balance pipe 6.

The EHP outdoor unit 3 includes the EHP compressor 62 to be driven by the commercial power source. It is considered that an example of this EHP compressor 62 is an inverter type compressor that can vary an output.

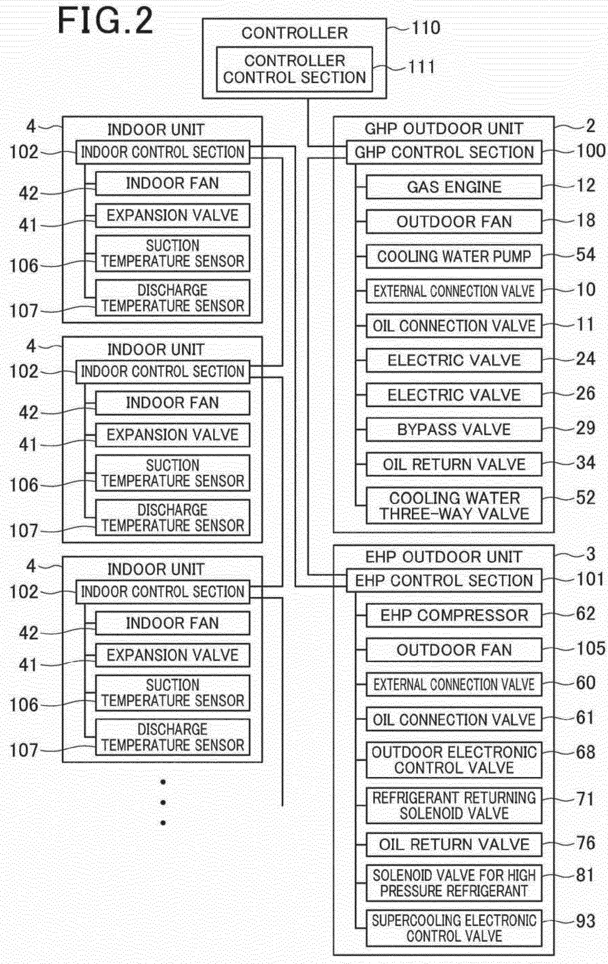

A discharge side of the EHP compressor 62 is connected to an oil separator 63, a four-way valve 64 and two outdoor heat exchangers 65 and 65 in order, and the outdoor heat exchanger 65 is connected to one external connection valve 60a via a refrigerant pipe 66. In the vicinity of the outdoor heat exchanger 65, an outdoor fan 105 (see Fig. 2) is provided to exchange heat between the outdoor heat exchanger 65 and the outdoor air.

A supercooling heat exchanger 90 is provided between the outdoor heat exchanger 65 and the external connection valve 60a.

Two systems of pipe lines are formed in the outdoor heat exchanger 65, and the refrigerant pipe 66 on a four-way valve 64 side and the refrigerant pipe 66 on a supercooling heat exchanger 90 side are respectively branched and connected to the outdoor heat exchanger 65. Furthermore, outdoor electronic control valves 68 and 68 are provided in the refrigerant pipe 66 on the supercooling heat exchanger 90 side of the outdoor heat exchanger 65.

The supercooling heat exchanger 90 includes two heat exchange units 91 and 91. The refrigerant pipe 66 on an outdoor heat exchanger 65 side and a refrigerant pipe 67 on an external connection valve 60a side are respectively branched and connected to each heat exchange unit 91 of the supercooling heat exchanger 90.

In the present embodiment, each heat exchange unit 91 is a double pipe type heat exchanger. Outer pipes of the heat exchange units 91 are connected to the refrigerant pipe 66 on the outdoor heat exchanger 65 side and the refrigerant pipe 67 on the external connection valve 60a side, respectively.

A middle portion of the refrigerant pipe 67 that connects the supercooling heat exchanger 90 to the external connection valve 60a is connected to a supercooling branch pipe 92. A middle portion of this supercooling branch pipe 92 is connected to an inner pipe 94 of each heat exchange unit 91 via a supercooling electronic control valve 93. The refrigerant that flows through the inner pipe 94 of the heat exchange unit 91 is returned to the refrigerant pipe 66 between the four-way valve 64 and an accumulator 69 via a supercooling refrigerant pipe 95.

The other external connection valve 60b is connected to a suction side of the EHP compressor 62 via the refrigerant pipe 66, and the four-way valve 64 and the accumulator 69 are provided in a middle portion of the refrigerant pipe 66.

Furthermore, a middle portion of the refrigerant pipe 66 which is between the EHP compressor 62 and the oil separator 63 is provided with a refrigerant return pipe 70 branched and connected to the refrigerant pipe 66 between the EHP compressor 62 and the accumulator 69. A refrigerant returning solenoid valve 71 is provided in a middle portion of the refrigerant return pipe 70. Then, when the refrigerant returning solenoid valve 71 is opened, a part of the refrigerant does not circulate in a refrigeration cycle and is guided to the suction side of the EHP compressor 62.

Additionally, a lower portion of the oil separator 63 is connected to an oil pipe 72, and a middle portion of the oil pipe 72 is connected to an oil return pipe 73 connected to the suction side of the EHP compressor 62. The oil return pipe 73 includes two branch pipes 74 and 75 that branch from the oil pipe 72, one branch pipe 74 is provided with an oil return valve 76, and the other branch pipe 75 is provided with a capillary tube 78. Furthermore, a capillary tube 79 is provided between connection portions of the oil pipe 72 to the respective branch pipes 74 and 75.

A middle portion of the refrigerant pipe 66 which is between the oil separator 63 and the four-way valve 64 is connected to a high pressure refrigerant pipe 80 midway branched and connected to a middle portion of the oil pipe 72. A middle portion of the high pressure refrigerant pipe 80 is provided with a solenoid valve 81 for a high pressure refrigerant.

Furthermore, the accumulator 69 includes an inflow pipe 82 into which the refrigerant of the refrigerant pipe 66 flows, and an outflow pipe 83 that sends an inner gas refrigerant of the accumulator 69 to the EHP compressor 62. The outflow pipe 83 is configured to open in an inner upper portion of the accumulator 69, and to send, to the EHP compressor 62, a gas refrigerant accumulated in the inner upper portion of the accumulator 69.

Additionally, the EHP compressor 62 is connected to an overflow pipe 84 connected to the suction side of the EHP compressor 62. In this overflow pipe 84, a strainer 85 and a throttle 86 to decompress oil are incorporated.

The external connection valve 60a of the EHP outdoor unit 3 is connected to one end of the interunit pipe 5, and the other end of this interunit pipe 5 is connected to a middle portion of the interunit pipe 5 which connects the external connection valve 10a of the GHP outdoor unit 2 to the indoor unit 4. The external connection valve 60b connected to a refrigerant pipe of the EHP outdoor unit 3 is connected to one end of the interunit pipe 5, and the other end of this interunit pipe 5 is connected to a middle portion of the interunit pipe 5 which connects the external connection valve 10b of the GHP outdoor unit 2 to the indoor unit 4.

Furthermore, the oil connection valve 61 of the EHP outdoor unit 3 is connected to the oil connection valve 11 of the GHP outdoor unit 2 via the oil balance pipe 6. Consequently, the GHP compressor 13 of the GHP outdoor unit 2 and the EHP compressor 62 of the EHP outdoor unit 3 can supply the oil to each other via the oil balance pipe 6, and balance of an oil amount can be held between the GHP compressor 13 of the GHP outdoor unit 2 and the EHP compressor 62 of the EHP outdoor unit 3.

Then, when a cooling operation is performed, the refrigerant flows as shown by a solid arrow line in Fig. 1, and when a heating operation is performed, the refrigerant flows as shown by a broken line in Fig. 1.

In the present embodiment, the indoor unit 4 includes a suction temperature sensor 106 that detects a suction temperature of indoor air, and a discharge temperature sensor 107 that detects a temperature of discharge air of the indoor fan 42.

Next, description will be made as to a control configuration of the air conditioner of the present embodiment. Fig. 2 is a block diagram showing the control configuration in the present embodiment.

As shown in Fig. 2, in the present embodiment, the GHP outdoor unit 2 includes a GHP control section 100 as a control section, and the EHP outdoor unit 3 includes an EHP control section 101 as a control section. Furthermore, each of the indoor units 4 includes an indoor control section 102.

Furthermore, in the present embodiment, the air conditioner includes a controller 110 that sends a control instruction signal to each of the GHP outdoor unit 2, the EHP outdoor unit 3 and the indoor unit 4.

The controller 110 includes a controller control section 111 to generally control the GHP control section 100, the EHP control section 101 and the indoor control section 102.

Each of the GHP control section 100, the EHP control section 101, the indoor control section 102 and the controller control section 111 includes, for example, a computation processing circuit such as a CPU, memories such as a ROM and a RAM, and others, and executes a predetermined program to perform predetermined control.

The GHP control section 100 is configured to perform drive control of the gas engine 12, the outdoor fan 18 and the cooling water pump 54 of the GHP outdoor unit 2, and to perform opening and closing control or opening degree control of the external connection valves 10a and 10b, the oil connection valve 11, the electric valve 24, the electric valve 26, the bypass valve 29, the oil return valve 34 and the cooling water three-way valve 52 of the GHP outdoor unit 2.

The EHP control section 101 is configured to perform drive control of the EHP compressor 62 and the outdoor fan 105 of the EHP outdoor unit 3, and to perform opening and closing control or opening degree control of the external connection valves 60a and 60b, the oil connection valve 61, the outdoor electronic control valve 68, the refrigerant returning solenoid valve 71, the oil return valve 76, the solenoid valve 81 for the high pressure refrigerant and the supercooling electronic control valve 93 of the EHP outdoor unit 3.

The indoor control section 102 is configured to perform drive control of the indoor fan 42 of each indoor unit 4, and to perform opening degree control of the expansion valve 41 of the indoor unit 4.

These control operations of the GHP control section 100, the EHP control section 101 and the indoor control section 102 are performed based on the control instruction signal sent from the controller control section 111.

At this time, in the present embodiment, the GHP control section 100 is set to a master, and the EHP control section 101 and the indoor control section 102 are set to slaves. The control instruction signal from the controller control section 111 is first transmitted to the GHP control section 100, and this control instruction signal is sequentially transmitted from the GHP control section 100 to the EHP control section 101 and the indoor control section 102.

In the present embodiment, each of the GHP outdoor unit 2 and the EHP outdoor unit 3 regulates an output in accordance with a cooling load. For example, when the cooling load is a low load, the EHP outdoor unit 3 is driven, and as the cooling load increases, the EHP outdoor unit 3 is stopped, and the GHP outdoor unit 2 is started. When the cooling load is a high load, the GHP outdoor unit 2 is driven, and additionally the EHP outdoor unit 3 is driven.

The controller control section 111 is configured to control the GHP outdoor unit 2, the EHP outdoor unit 3 and the indoor unit 4 based on a number of the indoor units 4 to be operated, a set temperature, an outdoor air temperature, and the like. Consequently, a control signal is output to each of the GHP control section 100, the EHP control section 101 and the indoor control section 102 so that an operation of the GHP outdoor unit 2 and an operation of the EHP outdoor unit 3 save energy most. In consequence, it is configured that the GHP control section 100 efficiently controls the operation of the GHP outdoor unit 2, the EHP control section 101 efficiently controls the operation of the EHP outdoor unit 3, and the indoor control section 102 efficiently controls the operation of the indoor unit 4.

Furthermore, in the present embodiment, the GHP control section 100 and the EHP control section 101 calculate outdoor outputs of the GHP outdoor unit 2 and an outdoor output of the EHP outdoor unit 3 from operation states of the GHP outdoor unit 2 and the EHP outdoor unit 3.

On the other hand, the indoor control section 102 is configured to detect the discharge temperature of air by the discharge temperature sensor 107 of the indoor unit 4, and to calculate a discharge differential temperature that is a difference between the discharge temperature and an indoor target discharge temperature. The indoor control section 102 is configured to transmit a discharge differential temperature calculated value to the GHP control section 100 and the EHP control section 101.

Note that when there are a plurality of indoor units 4 in which a thermostat is on, the discharge differential temperature is a value obtained by averaging discharge differential temperatures of the plurality of indoor units 4.

The GHP control section 100 is configured to determine whether or not the discharge differential temperature calculated value is higher than a predetermined value, and to transmit the outdoor output calculated value as it is to the controller control section 111, when determining that the discharge differential temperature calculated value is not higher than the predetermined value. The EHP control section 101 is configured to determine whether or not the discharge differential temperature calculated value is higher than the predetermined value, and to transmit the outdoor output calculated value as it is to the controller control section 111 via the GHP control section 100, when determining that the discharge differential temperature calculated value is not higher than the predetermined value.

The controller control section 111 is configured to acquire calculated value of a suction differential temperature that is a difference between the suction temperature of air which is detected by the suction temperature sensor 106 of the indoor unit 4 and an indoor set temperature set by an indoor remote controller (not shown).

The controller control section 111 is configured to estimate current air conditioning load on the basis of the outdoor output calculated value, the suction differential temperature calculated value and the operation state of the indoor unit 4 which is sent from the indoor control section 102. The controller control section 111 is configured to set an upper limit of horsepower (output) during the operation, on the basis of an air conditioning load estimated value.

The controller control section 111 is configured to transmit an instruction signal of the set operation upper limit horsepower to the GHP control section 100 and the EHP control section 101.

The GHP control section 100 and the EHP control section 101 are configured to control the operation in a range that is not in excess of this upper limit horsepower on the basis of the instruction signal of the operation upper limit horsepower from the controller control section 111.

Furthermore, the GHP control section 100 and the EHP control section 101 are configured to determine whether or not the discharge differential temperature calculated value is higher than the predetermined value, and to perform correction processing of multiplying the outdoor output calculated value by a correction value α, when determining that the discharge differential temperature calculated value is higher than the predetermined value.

Here, the correction value α ≥ 1, and the correction value α increases as the discharge differential temperature increases. Furthermore, the correction value α differs between a cooling operation time and a heating operation time. Additionally, the correction value α has a larger value in an air conditioner, that is, a so-called chiller in which a water heat exchanger exchanges heat with the refrigerant by each of the GHP outdoor unit 2 and the EHP outdoor unit 3 and which performs indoor air conditioning with cold and hot water resulting from the heat exchange, than in the air conditioner that exchanges heat between refrigerant and indoor air to perform air conditioning as in the present embodiment.

Thus, the GHP control section 100 is configured to correct the outdoor output calculated value with the correction value α, and to transmit the corrected outdoor output calculated value to the controller control section 111. Furthermore, the EHP control section 101 is configured to correct the outdoor output calculated value with the correction value α, and to transmit the corrected outdoor output calculated value to the controller control section 111 via the GHP control section 100.

Consequently, the controller control section 111 is configured to estimate the current air conditioning load on the basis of the corrected outdoor output calculated value, the suction differential temperature calculated value, and the operation state of the indoor unit 4.

That is, when the discharge differential temperature of the indoor unit 4 is large, the outdoor output calculated value increases. Therefore, when the current air conditioning load is estimated on the basis of the corrected outdoor output calculated value and when the discharge differential temperature of the indoor unit 4 is large, it is estimated that the air conditioning load is large. Consequently, the upper limit horsepower set by the controller control section 111 increases.

Note that in the present embodiment, correction processing of the outdoor output calculated value is performed by multiplying the outdoor output calculated value by the correction value α, but the present invention is not limited to this embodiment. For example, when the discharge differential temperature calculated value is higher than the predetermined value, a table may be prepared beforehand in accordance with a difference between the discharge differential temperature calculated value and the predetermined value, the cooling operation, the heating operation or the like, and the correction processing may be performed on the basis of this table.

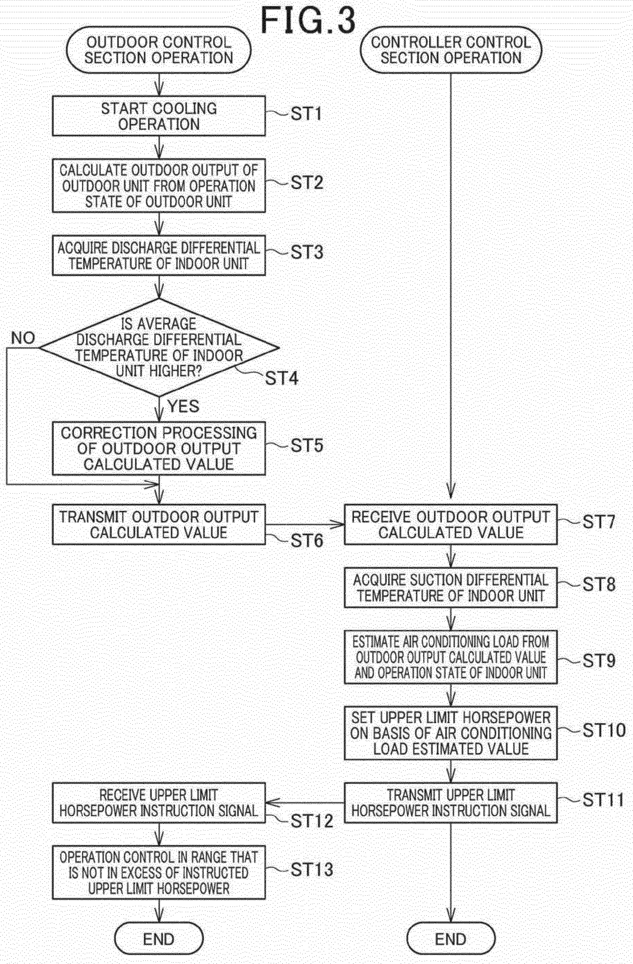

Next, description will be made as to an operation of the present embodiment with reference to a flowchart shown in Fig. 3.

Fig. 3 is the flowchart showing the operation of the present embodiment.

As shown in Fig. 3, in the present embodiment, the GHP control section 100 or the EHP control section 101 first drives the GHP outdoor unit 2 or the EHP outdoor unit 3 in accordance with the instruction signal of the controller control section 111, to perform the cooling or heating operation (ST1).

At this time, the GHP control section 100 and the EHP control section 101 calculate the outdoor output of the GHP outdoor unit 2 and the outdoor output of the EHP outdoor unit 3 from the operation states of the GHP outdoor unit 2 and the EHP outdoor unit 3 (ST2).

On the other hand, the indoor control section 102 detects the discharge temperature of air by the discharge temperature sensor 107 of the indoor unit 4, and calculates the discharge differential temperature that is the difference between the discharge temperature and the indoor target discharge temperature. The indoor control section 102 transmits the discharge differential temperature calculated value to the GHP control section 100 and the EHP control section 101, and the GHP control section 100 and the EHP control section 101 acquire the discharge differential temperature calculated value (ST4).

Then, the GHP control section 100 and the EHP control section 101 determine whether the discharge differential temperature calculated value is more than or equal to the predetermined value (ST4). When determining that the discharge differential temperature calculated value is not higher than the predetermined value (ST4: NO), the control section transmits the outdoor output calculated value as it is to the controller control section 111 (ST6).

The controller control section 111 receives the outdoor output calculated value (ST7), and the controller control section 111 acquires the calculated value of the suction differential temperature that is a difference between the suction temperature of air which is detected by the suction temperature sensor 106 of the indoor unit 4 and the indoor set temperature set by the indoor remote controller (not shown) (ST8).

The controller control section 111 estimates the current air conditioning load on the basis of the outdoor output calculated value, the suction differential temperature calculated value and the operation state of the indoor unit 4 (ST9). The controller control section 111 sets the upper limit of the horsepower (output) during the operation, on the basis of the air conditioning load estimated value (ST10).

The controller control section 111 transmits the instruction signal of the set operation upper limit horsepower to the GHP control section 100 and the EHP control section 101 (ST11).

The GHP control section 100 and the EHP control section 101 receive the instruction signal of the operation upper limit horsepower from the controller control section 111 (ST12), and execute the control of the operation in the range that is not in excess of this upper limit horsepower on the basis of the operation upper limit horsepower.

Consequently, when the discharge differential temperature calculated value is not higher than the predetermined value, the GHP control section 100 and the EHP control section 101 can perform the efficient air conditioning operation.

Furthermore, the GHP control section 100 and the EHP control section 101 determine whether the discharge differential temperature calculated value is more than or equal to the predetermined value. When determining that the discharge differential temperature calculated value is higher than the predetermined value (ST4; YES), the control sections perform the correction processing of the outdoor output calculated value (ST5).

The GHP control section 100 and the EHP control section 101 transmit the corrected outdoor output calculated value to the controller control section 111 (ST6).

The controller control section 111 performs processing of the above described steps (ST7) to (ST11).

Thus, the current air conditioning load is estimated on the basis of the corrected outdoor output calculated value. Consequently, when the discharge differential temperature of the indoor unit 4 is large, it is estimated that the air conditioning load is large. Consequently, the upper limit horsepower set by the controller control section 111 can be increased.

Therefore, the GHP control section 100 and the EHP control section 101 can perform the operation with the upper limit horsepower based on the corrected outdoor output calculated value, when the discharge differential temperature of the indoor unit 4 is large. Therefore, only when the air conditioning capability is urgently required, the operation upper limit horsepower can be increased, and the necessary horsepower can be obtained.

As described above, in the present embodiment, the air conditioner includes the GHP control section 100 and the EHP control section 101 (outdoor control sections) that control the GHP outdoor unit 2 and the EHP outdoor unit 3 (outdoor units), the indoor control section 102 that controls the indoor unit 4, and the controller control section 111 that sends the control instruction signal to the control sections. The GHP control section 100 and the EHP control section 101 calculate the outdoor outputs of the GHP outdoor unit 2 and the EHP outdoor unit 3 from the operation states of the GHP outdoor unit 2 and the EHP outdoor unit 3. Furthermore, the control sections correct the outdoor output calculated value to transmit the value to the controller control section 111, when determining that the discharge differential temperature calculated value calculated by the indoor control section 102 is more than or equal to the predetermined value. The controller control section 111 sets the operation upper limit horsepower of the GHP outdoor unit 2 and the EHP outdoor unit 3 on the basis of the corrected outdoor output calculated value, and transmits the horsepower to the GHP control section 100 and the EHP control section 101.

According to this embodiment, the efficient air conditioning operation can be performed. Furthermore, only when the air conditioning capability is urgently required, the operation upper limit horsepower is increased, and the necessary horsepower can be obtained. As a result, it is possible to enhance the air conditioning comfort.

Furthermore, in the present embodiment, when the plurality of indoor units 4 are provided, the discharge differential temperature calculated value by the indoor control section 102 is the value obtained by averaging the discharge differential temperatures of the plurality of indoor units 4.

According to this embodiment, the discharge differential temperature calculated value is the average value of the discharge differential temperatures of the plurality of indoor units 4. Consequently, the state of the indoor unit 4 can be determined on the basis of the discharge differential temperature of each of the plurality of indoor units 4.

Additionally, in the present embodiment, the correction processing of the outdoor output calculated value by the GHP control section 100 and the EHP control section 101 (outdoor control sections) is performed by multiplying the outdoor output calculated value by the correction value α, when determining that the discharge differential temperature calculated value calculated by the indoor control section 102 is more than or equal to the predetermined value.

According to this embodiment, the GHP control section 100 and the EHP control section 101 can simply perform the correction processing of the outdoor output calculated value.

Note that the above embodiment illustrates one aspect to which the present invention is applied, and the present invention is not limited to the above embodiment.

In the above embodiment, there has been described the example where the plurality of outdoor units are constituted of the GHP outdoor unit 2 and the EHP outdoor unit 3, but the present invention is not limited to this example. For example, the outdoor units may only include a plurality of GHP outdoor units 2 or may only include a plurality of EHP outdoor units 3.

Furthermore, in the above embodiment, there has been described the example where the GHP control section 100 is set to the master, and the EHP control section 101 is set to the slave, but the present invention is not limited to this example. For example, the EHP control section 101 may be set to a master, the GHP control section 100 may be set to a slave, and the control instruction signal from the controller control section 111 may be first transmitted to the EHP control section 101.

Furthermore, without setting the master or the slave, the GHP control section 100, the EHP control section 101 and the indoor control section 102 may be connected in parallel to the controller control section 111, and the controller control section 111 may individually transmit control instruction signals to the GHP control section 100, the EHP control section 101 and the indoor control section 102.

As described above, the air conditioner according to the present invention is capable of performing an efficient air conditioning operation. Furthermore, only when an air conditioning capability is urgently required, an operation upper limit horsepower is increased, and a necessary horsepower can be obtained. The air conditioner can be suitably used as an air conditioner that can enhance air conditioning comfort.

- 1: air conditioner
- 2: GHP outdoor unit
- 3: EHP outdoor unit
- 4: indoor unit
- 12: gas engine
- 13: GHP compressor
- 17 and 65: outdoor heat exchanger
- 40: indoor heat exchanger
- 62: EHP compressor
- 100: GHP control section
- 101: EHP control section
- 102: indoor control section
- 106: suction temperature sensor
- 107: discharge temperature sensor
- 110: controller
- 111: controller control section

## Claims

1. An air conditioner in which each of a plurality of outdoor units (2, 3) is connected to an indoor unit (4) via an interunit pipe (5), each outdoor unit is operated and indoor air conditioning is performed by the indoor unit, each of the plurality of outdoor units (2, 3) comprises an outdoor control section (100, 101) configured to control the respective outdoor unit, an indoor control section (102) is configured to control the indoor unit, and a controller control section (111) is configured to send a control instruction signal to the respective outdoor control section and the indoor control section, the air conditioner being **characterised in that** the outdoor control section is configured to calculate an outdoor output of the outdoor unit from an operation state of the outdoor unit, to correct an outdoor output calculated value and to transmit the value to the controller control section, when determining that an discharge differential temperature calculated value calculated by the indoor control section is more than or equal to a predetermined value, and **in that** the controller control section is configured to set an operation upper limit horsepower of the respective outdoor unit on basis of the corrected outdoor output calculated value, and to transmit the horsepower to the respective outdoor control section.

2. The air conditioner according to claim 1, wherein when a plurality of indoor units are provided, the discharge differential temperature calculated value by the indoor control section is a value obtained by averaging discharge differential temperatures of the plurality of indoor units.

3. The air conditioner according to claim 1 or 2, wherein correction processing of the outdoor output calculated value by the outdoor control section is performed by multiplying the outdoor output calculated value by a correction value α, when determining that the discharge differential temperature calculated value calculated by the indoor control section is more than or equal to the predetermined value.

4. The air conditioner according to any one of claims 1 to 3, wherein the plurality of outdoor units comprise a GHP outdoor unit (2) including a GHP compressor (13) that is driven by an engine (12) and an EHP outdoor unit (3) including an EHP compressor (62) that is driven by a commercial power source.

## Patentansprüche

1. Klimaanlage, bei der jede einer Vielzahl von Außeneinheiten (2, 3) mit einer Inneneinheit (4) über eine Zwischeneinheitsleitung (5) verbunden ist, wobei jede Außeneinheit durch die Inneneinheit betrieben wird und die Innenklimatisierung durch die Inneneinheit durchgeführt wird, wobei jede der Vielzahl von Außeneinheiten (2, 3) umfasst:
einen Außen-Steuerabschnitt (100, 101), der zur Steuerung der jeweiligen Außeneinheit konfiguriert ist,
einen Innen-Steuerabschnitt (102), der zur Steuerung der Inneneinheit konfiguriert ist, und
einen Steuervorrichtungs-Steuerabschnitt (111), der dafür konfiguriert ist, ein Steuerbefehlssignal an den jeweiligen Außen-Steuerabschnitt und den Innen-Steuerabschnitt zu senden,
wobei die Klimaanlage **dadurch gekennzeichnet ist, dass** der Außen-Steuerabschnitt dafür konfiguriert ist, eine Außen-Leistung der Außeneinheit aus einem Betriebszustand der Außeneinheit zu berechnen, einen berechneten Wert der Außen-Leistung zu korrigieren und den Wert an den Steuervorrichtungs-Steuerabschnitt zu übertragen, wenn festgestellt wird, dass ein von dem Innen-Steuerabschnitt berechneter Wert der Auslass-Differenztemperatur größer oder gleich einem vorbestimmten Wert ist, und dadurch, dass der Steuervorrichtungs-Steuerabschnitt dafür konfiguriert ist, eine obere Betriebsgrenzleistung der jeweiligen Außeneinheit auf der Grundlage des korrigierten berechneten Wertes der Außen-Leistung einzustellen und die Leistung an den jeweiligen Außen-Steuerabschnitt zu übertragen.

2. Klimaanlage nach Anspruch 1, wobei dann, wenn eine Vielzahl von Inneneinheiten vorgesehen ist, der von dem Innen-Steuerabschnitt berechnete Wert der Auslass-Differenztemperatur ein Wert ist, der durch Mittelwertbildung der Auslass-Differenztemperaturen der Vielzahl von Inneneinheiten erhalten wird.

3. Klimaanlage nach Anspruch 1 oder 2, wobei eine Korrekturverarbeitung des berechneten Wertes der Außen-Leistung durch den Außen-Steuerabschnitt durchgeführt wird, indem der berechnete Wert der Außen-Leistung mit einem Korrekturwert α multipliziert wird, wenn festgestellt wird, dass der berechnete Wert der Auslass-Differenztemperatur, der durch den Innen-Steuerabschnitt berechnet wird, größer oder gleich dem vorbestimmten Wert ist.

4. Klimaanlage nach einem der Ansprüche 1 bis 3, wobei die Vielzahl von Außeneinheiten eine GHP-Außeneinheit (2) mit einem GHP-Kompressor (13), der von einer Maschine (12) angetrieben wird, und eine EHP-Außeneinheit (3) mit einem EHP-Kompressor (62), der von einer Netzstromquelle angetrieben wird, umfasst.

## Revendications

1. Climatiseur dans lequel chacune d'une pluralité d'unités extérieures (2, 3) est reliée à une unité intérieure (4) par l'intermédiaire d'un tuyau intermédiaire (5), chaque unité extérieure est actionnée et un conditionnement d'air intérieur est effectué par l'unité intérieure, chacune de la pluralité d'unités extérieures (2, 3) comprend une section de commande extérieure (100, 101) conçue pour commander l'unité extérieure respective, une section de commande intérieure (102) est conçue pour commander l'unité intérieure et une section de commande de dispositif de commande (111) est conçue pour envoyer un signal d'instruction de commande à la section de commande extérieure respective et à la section de commande intérieure, le climatiseur étant **caractérisé en ce que** la section de commande extérieure est conçue pour calculer une sortie extérieure de l'unité extérieure à partir d'un état de fonctionnement de l'unité extérieure, pour corriger une valeur calculée de sortie extérieure et pour transmettre la valeur à la section de commande de dispositif de commande, lorsqu'il est déterminé qu'une valeur calculée de température différentielle d'évacuation calculée par la section de commande intérieure est supérieure ou égale à une valeur prédéterminée et **en ce que** la section de commande de dispositif de commande est conçue pour régler une puissance limite supérieure de fonctionnement de l'unité extérieure respective sur la base de la valeur calculée corrigée de sortie extérieure et pour transmettre la puissance à la section de commande extérieure respective.

2. Climatiseur selon la revendication 1, où, lorsqu'une pluralité d'unités intérieures sont prévues, la valeur calculée de température différentielle d'évacuation par la section de commande intérieure est une valeur obtenue par la moyenne des températures différentielles d'évacuation de la pluralité d'unités intérieures.

3. Climatiseur selon la revendication 1 ou 2, le traitement de correction de la valeur calculée de sortie extérieure par la section de commande extérieure étant effectué par multiplication de la valeur calculée de sortie extérieure par une valeur de correction α, lorsqu'il est déterminé que la valeur calculée de température différentielle d'évacuation calculée par la section de commande intérieure est supérieure ou égale à la valeur prédéterminée.

4. Climatiseur selon l'une quelconque des revendications 1 à 3, la pluralité d'unités extérieures comprenant une unité extérieure de pompe à chaleur à gaz (PACg) (2) comprenant un compresseur de PACg (13) qui est entraîné par un moteur (12) et une unité extérieure de pompe à chaleur à énergie (PACe) (3) comprenant un compresseur de PACe (62) qui est entraîné par une source d'énergie commerciale.
